**Europäisches Patentamt**

**European Patent Office**

**Office européen des brevets**

(11) Publication number: **0 184 448**

**A2**

# (12) EUROPEAN PATENT APPLICATION

(21) Application number: **85308844.1**

(22) Date of filing: **04.12.85**

(51) Int. Cl.⁴: **H 04 N 11/00**

(30) Priority: **06.12.84 JP 258269/84**
**11.12.84 JP 261616/84**

(43) Date of publication of application:
**11.06.86 Bulletin 86/24**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Kawashima, Hiroyuki c/o Patents Division**
**Sony Corporation 6-7-35 Kitashinagawa**
**Shinagawa-ku Tokyo 141(JP)**

(72) Inventor: **Kita, Hiroyuki c/o Patents Division**
**Sony Corporation 6-7-35 Kitashinagawa**
**Shinagawa-ku Tokyo 141(JP)**

(72) Inventor: **Tokuhara, Masaharu c/o Patents Division**
**Sony Corporation 6-7-35 Kitashinagawa**
**Shinagawa-ku Tokyo 141(JP)**

(74) Representative: **Cotter, Ivan John et al,**
**D. YOUNG & CO. 10 Staple Inn**
**London WC1V 7RD(GB)**

(54) Digital scan converters.

(57) A digital scan converter includes an analog-to-digital converter (35) for converting red, green and blue analog primary colour signals (R,G,B) to red, green and blue digital primary colour signals, a memory (36) for storing the red, green and blue digital primary colour signals, a memory control circuit (42,43) for writing the red, green and blue digital primary colour signals in the memory (36) at one speed and reading out the red, green and blue digital primary colour signals from the memory at a faster speed, a digital-to-analog converter (37) for converting the red, green and blue digital primary colour signals read out from the memory (36) to scan-converted red, green and blue analog primary colour signals (2.R,2.G,2.B), a clock signal generator for supplying clock signals to the memory control circuit (42,43), the digital-to-analog converter (37) and the analog-to-digital converter (35), and a synchronising signal generator (49) also controlled by the memory control circuit (41,42,43) for producing synchronising signals (2.f_H) for the scan-converted red, green and blue analog primary colour signals (2.R,2.G,2.B).

FIG. 2

1

# DIGITAL SCAN CONVERTERS

This invention relates to digital scan converters.

It is known to scan convert a video signal for obtaining a picture of high or enhanced definition. In such case, synchronising signals, such as the horizontal synchronising signal and so on, also have to be scan-converted. In the prior art, the synchronising signal is superimposed upon a video signal and then scan-converted with the latter. After such scan conversion, the synchronising signal is separated synchronously from the video signal.

However, when the horizontal synchronising signal or the like is superimposed upon the video signal and then scan-converted, as described above, a wide dynamic range cannot be obtained and the noise margin is reduced since the video signal has to be analog-to-digital converted (A/D-converted) over a wide range from a synchronising chip level to 100IRE (the position 100 on the IRE scale). Further, since it is necessary that, after scan conversion, the synchronising signal has to be separated from the video signal, a special synchronising separator circuit is required and this increases the complexity and cost of the circuit arrangement. Although it may be possible to provide a special memory for a synchronising signal for permitting scan converting of the synchronising signal in the same way as the video signal, the resulting circuit arrangement also is undesirably complicated.

According to the invention there is provided a digital scan converter for a colour video signal, the converter comprising:

analog-to-digital converter means for converting red, green and blue analog primary colour signals to red, green and blue digital primary colour signals;

memory means for storing the red, green and blue digital primary colour signals;

memory control means for writing the red, green and blue digital primary colour signals in the memory means at a predetermined writing speed and reading out the red, green and blue digital primary colour signals from the memory means at a reading speed which is faster than the writing speed;

digital-to-analog converter means for converting the red, green and blue digital primary colour signals read out from the memory means to scan-converted red, green and blue analog primary colour signals;

clock signal generating means for supplying clock signals to the memory control means, the digital-to-analog converter means and the analog-to-digital converter means; and

synchronising signal generator means controlled by the memory control means for producing synchronising signals for the scan-converted red, green and blue analog primary colour signals.

A digital scan converter embodying the invention and described hereinbelow employs a relatively simplified circuit arrangement, can easily scan-convert a synchronising signal, and can be used with a high definition television receiver.

The invention will now be further described, by way of illustrative and non-limiting example, with reference to the accompanying drawings, in which corresponding elements are identified by the same reference numerals throughout, and in which:

Figure 1 is a block diagram showing a television receiver to which a digital scan converter circuit according to an embodiment of this invention is applied;

Figure 2 is a block diagram showing more fully the digital scan converter circuit used in Figure 1;

Figure 3 is a circuit diagram showing a component of Figure 2; and

Figures 4A to 4D are waveform diagrams to which reference will be made in explaining the operation of the scan converter circuit of Figure 2.

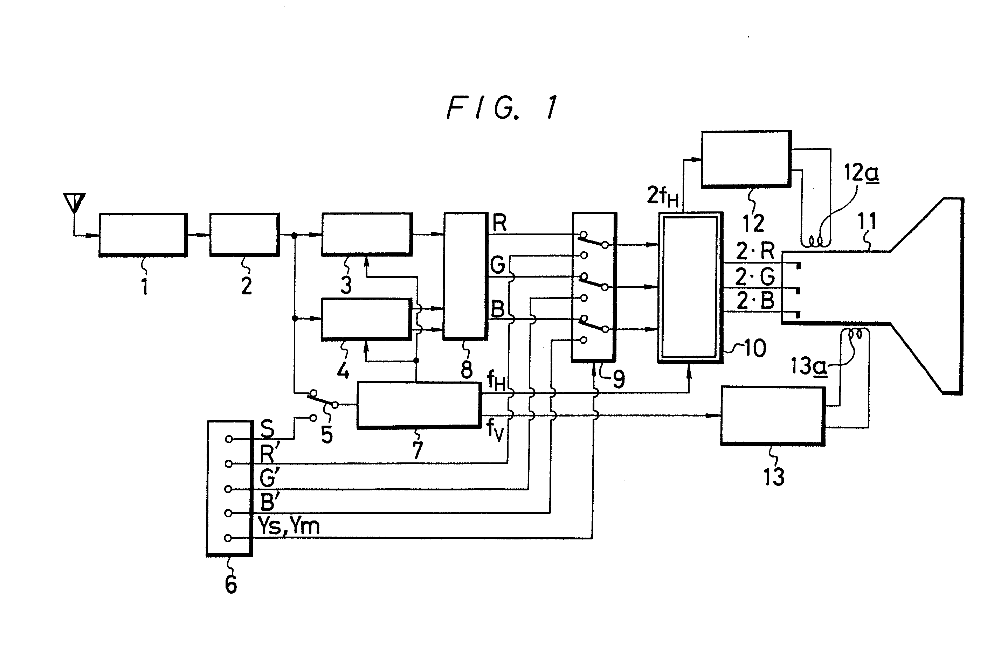

Figure 1 shows a television receiver to which a digital scan converter circuit embodying the present invention is applied. In the receiver, a composite colour video signal (according to the NTSC or other standard system) is obtained through a tuner 1 and a video intermediate frequency (VIF) circuit 2. The composite colour video signal at an output of the VIF circuit 2 is supplied to a luminance (Y) signal processor circuit 3 and to a chrominance (C) signal processor circuit 4. The composite colour video signal is supplied also to one input of a switch or switching circuit 5 which has another input receiving an external synchronising signal S from an external input terminal assembly 6. An output of the switch 5 is fed to a synchronising separator circuit 7. A synchronising signal from the separator circuit 7 is supplied to the signal processor circuits 3 and 4, from which a luminance signal and colour difference signals, respectively, are derived.

The luminance signal and colour difference signals from the processor circuits 3 and 4 are supplied to a matrix circuit 8 which generates therefrom red, green and blue primary colour signals R, G and B. The three primary colour signals are supplied to a switching circuit 9 in which they are selectively mixed with red, green and blue primary colour signals R', B' and G' from the external input terminal assembly 6 in response to control signals Ys and Ym also supplied from the external input terminal assembly 6. Signals from the switching circuit 9 are fed to a scan converter circuit 10. The various signals applied to the external input terminal assembly 6 advantageously may be provided by a microcomputer or the like.

The synchronising signal from the synchronising separator circuit 7, which has a normal or standard frequency $f_H$, is supplied to the scan converter circuit 10 in which a conversion is carried out so that the number of horizontal scanning lines for each of the three primary colour signals is doubled, with the scan-converted synchronising signal as a reference, to produce scan-converted primary colour signals 2.R, 2.G and 2.B which are supplied to an electron gun (not shown) of a picture tube or cathode ray tube (CRT) 11. A horizontal synchronising signal having a frequency $2f_H$ equal to twice the normal or standard frequency $f_H$ is supplied from the scan converter circuit 10 through a horizontal deflection circuit 12 to a horizontal yoke 12a of the picture tube 11. Further, a vertical synchronising signal having a standard frequency $f_V$ is supplied from the separator circuit 7 through a vertical deflection circuit 13 to a vertical deflection yoke 13a of the picture tube 11.

Accordingly, in the television receiver of Figure 1, the three primary colour signals, R, G, B formed by the signal processor circuits 3 and 4 and the matrix circuit 8 are scan-converted and displayed on the picture tube 11 by the horizontal deflection signal having the frequency $2f_H$. Further, since the synchronising signal S and the three primary colour signals R', G' and B' from an external microcomputer or the like are switched by the switching circuits 5 and 9, respectively, and fed to the synchronising separator circuit 7 and the scan converter circuit 10, the three external primary colour signals R', G' and B' also can be scan-converted and then displayed on the picture tube 11. Furthermore, the three external primary colour signals R',

G' and B' are mixed selectively with the three primary colour signals R, G and B by the switching circuit 9 in response to the control signals Ys and Ym. Then, the relatively mixed primary colour signals are scan-converted and displayed on the picture tube 11 in superimposed manner.

Since, in the above-described television receiver, the luminance signal and the chrominance signal are processed prior to the scan-conversion, the circuit elements previously used for that purpose can be used in their original conditions. Further, since the external signals applied to the terminal assembly 6 can be mixed selectively with the luminance signal and the colour difference signals or with the three primary colour signals R, G and B before being scan-converted, it is possible easily to display them on the picture tube 11 in a superimposed state. Furthermore, since the scan conversion is carried out for the luminance and colour difference signals or the three primary colour signals, the scan converter circuit can be designed to be applicable for general use, that is, independently of the colour standard system of the composite colour video signal.

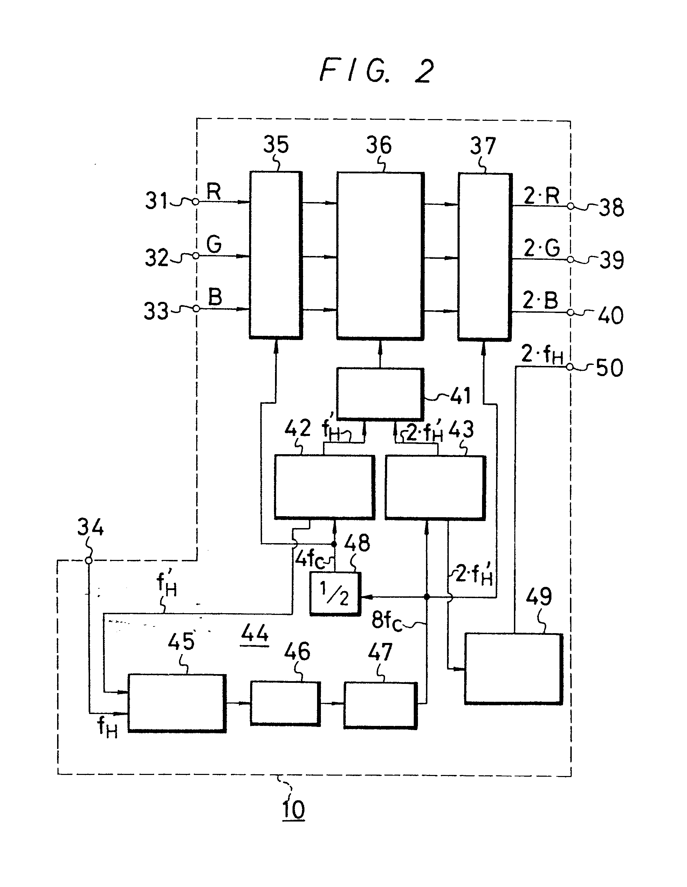

Referring to Figure 2, it will be seen that the scan converter circuit 10 has input terminals 31, 32 and 33 to which the red, green and blue primary colour signals R, G and B are supplied respectively, and an input terminal 34 to which the synchronising signal $f_H$ is supplied. An analog-to-digital (A/D) converter circuit 35 is connected to the input terminals 31, 32 and 33 for converting the analog primary colour signals R, G and B to digital primary colour signals (hereinafter simply referred to as A/D-conversion). A memory 36 receives output signals from the A/D converter circuit 35, and a digital-to-analog (D/A) converter circuit 37 receives digital signals read from the memory 36 and converts the digital signals to the scan-converted analog signals 2.R, 2.G and 2.B (hereinafter simply referred to as D/A conversion). Output terminals 38, 39 and 40 deliver the scan-converted analog primary colour signals 2.R, 2.G and 2.B from the D/A converter circuit 37.

A memory control circuit 41 is provided for controlling the memory 36, and address signals from a writing or write address counter 42 and a reading or read address counter 43 are supplied through the memory control circuit 41 to the memory 36.

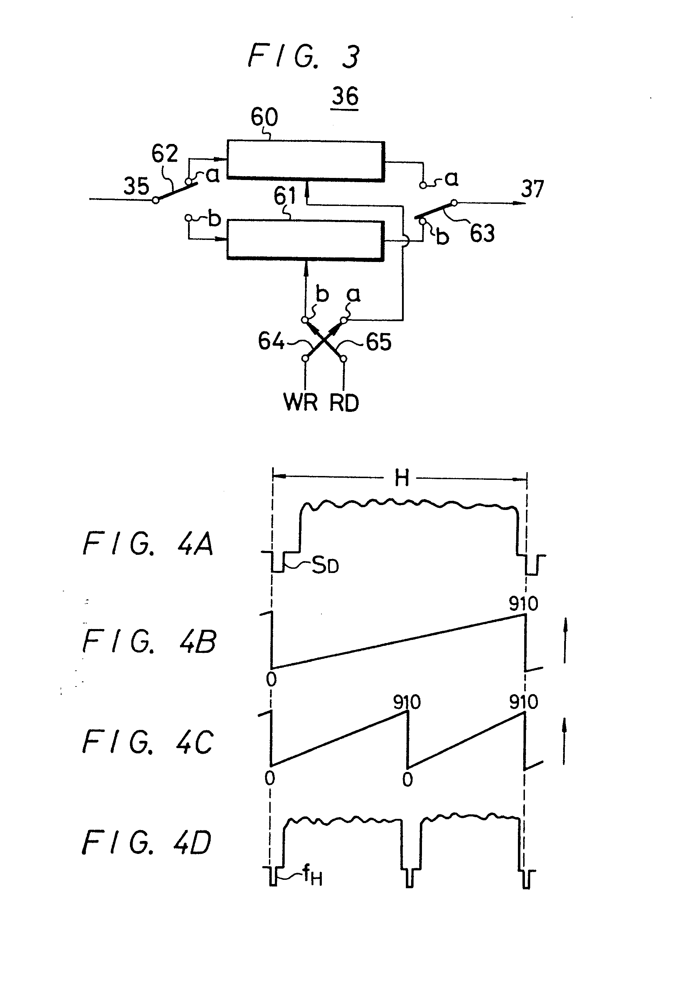

The memory 36 will be described in more detail with reference to Figure 3, in which it is shown to include a pair of 1H (H is the horizontal period) line memories 60 and 61 for each of the three primary colour signals. The line mrmories 60 and 61 are switched selectively by switches 62 and 63 provided at the input and output sides, respectively, for writing and reading alternately in each pair of line memories. Upon writing in the line memory 60 and reading from the line memory 61, a switch 64 included in the memory control circuit 41 engages a contact a and a switch 65 also included in the memory control circuit 41 engages a contact b, while the switch 62 engages a contact a and the switch 63 engages a contact b, as shown in Figure 3. Thus, the digital red, green or blue primary colour signal from the A/D converter circuit 35 is received through the switch 62 and written in the line memory 60 in response to an address signal WR from the writing address counter 42, while the primary colour signal earlier written in the line memory 61 is read out at a speed twice as fast as the writing speed (as will be described later) in response to an address signal RD from the reading address counter 43 and then fed through the switch 63 to the D/A converter circuit 37.

Conversely, during writing in the line memory 61 and reading from the line memory 60, the switch 64 is engaged with the contact b and the switch 65 is engaged with the contact a while the switch 62 engages its contact b and the switch 63 engages its contact a, whereby the digital red, green or blue primary colour signal from the A/D converter circuit 35 is written in the line memory 61 in response to the address signal WR from the writing address counter 42, while the primary colour signal earlier written in the line memory 60 is read out at a speed twice as fast as the writing speed in response to the address signal RD from the reading address counter 43 and then fed through the switch 63 to the D/A converter 37. It will be appreciated that, if the line memories 60 and 61 and associated switches 62 to 64 shown in Figure 3 are (for example) employed for the red primary colour signal, a similar circuit arrangement is provided in the memory 36 for each of the green and blue primary colour signals.

While the memory 36 desirably is constructed as described above by way of example, the circuit arrangement of the memory 36 is not limited to that construction and can be embodied in various different ways.

Referring back to Figure 2, it will be seen that a phase locked loop (PLL) circuit 44 is provided for generating clock signals to be counted by the address counters 42 and 43. The PLL circuit 44 comprises a phase comparator circuit 45, a low-pass filter (LPF) 46 and a voltage controlled oscillator (VCO) 47. The phase comparator circuit 45 is supplied at one input terminal thereof with the horizontal synchronising signal $f_H$, which is applied from the synchronising separator circuit 7 through an input terminal 34, and is supplied at another input terminal with a signal $f'_H$ of the same frequency from the writing address counter 42. The VCO 47 produces a clock signal having a predetermined frequency of, for example, 8fc, where fc is the NTSC colour subcarrier frequency of 3.58 MHz. The clock signal from the VCO 47 is supplied to the reading address counter 43 and also to the D/A converter circuit 37 as a sampling pulse signal thereof. Further, the clock signal 8fc from the VCO 47 is supplied to a frequency divider 48 and divided by two therein to provide a clock signal having a frequency of 4fc. The clock signal having the frequency 4fc is supplied to the writing address counter 42 and also to the A/D converter circuit 35 as a sampling pulse signal thereof.

Each of the writing and reading address counters 42 and 43 is formed as a counter which counts, for example, 910 of the clock signal pulses applied thereto. Accordingly, when the writing address counter 42 counts the clock signal having the frequency 4fc, that frequency is frequency-divided by 910 and a signal with the frequency $f'_H$ is delivered therefrom as the write address signal. Whereas, when the reading address counter 43 counts the clock signal having the frequency 8fc, the latter is frequency-divided by 910 and a signal having the frequency $2.f'_H$ is delivered therefrom as the read address signal.

The scan converter circuit 10 includes also a synchronising signal generator circuit 49 which generates a synchronising signal of a predetermined width in response to the $2.f'_H$ signal from the reading address counter 43 and delays this synchronising signal so that it has a predetermined positional relation relative to the video signal. The resulting scan-converted synchronising signal $2f_H$ is delivered from the circuit 49 to an output terminal 50.

The operation of the above-described embodiment of the invention will now be described. When a video signal shown in Figure 4A is delivered from the VIF circuit 2 in Figure 1, this video signal is processed by the luminance signal processor circuit 3 and the chrominance signal processor circuit 4 in response to the synchronising signal separated from the video signal by the separator circuit 7. The luminance output signal from the luminance signal processor circuit 3 and the colour difference signals from the chrominance signal processor circuit 4 are supplied to the matrix circuit 8 with the result that the matrix circuit 8 produces, at its output terminals, the three analog primary colour signals R, G and B.

When the three analog primary colour signals R, G and B are supplied through the switching circuit 9 to the A/D converter circuit 35, the circuit 35 converts them to digital primary colour signals which are supplied to the respective switches 62 in the memory 36. In the memory 36, the digital primary colour signals are written in the respective line memory 60 or 61 in response to the address signal WR which is provided by equally dividing by 910 the signal $f'_H$ from the writing address counter 42, as shown in Figure 4B. Then, the written digital primary colour signals are read out sequentially from the respective line memory 60 or 61 of the memory 36 in response to the address signal RD which is provided by equally dividing by 910 the signal $2.f'_H$ from the reading address counter 43, as shown in Figure 4C. In other words, the digital primary colour signals written in the memory 36 are read out therefrom at a speed which is twice as fast as the writing speed.

The read-out primary colour signals are passed through the respective switches 63 and converted into analog form by the D/A converter 37, whereby scan-converted primary colour signals 2.R, 2.G and 2.B are produced at the output terminals 38, 39 and 40, respectively, as shown in Figure 4D.

The signal $2.f'_H$ from the reading address counter 43, for example at an address 0, is supplied to the synchronising signal generator circuit 49 in which it is reshaped to provide a signal having a predetermined width corresponding to that of a desired synchronising signal and then delayed to have a predetermined positional relationship relative to the video signal. As a result, at the output side of the synchronising signal generator circuit 49, that is at the output terminal 50, there are produced two synchronising signals at equal intervals during each horizontal period 1H. In other words, a scan-converted synchronising signal $2.f_H$ is provided at the terminal 50.

While the primary colour signals and the synchronising signal inherently are separated in the scan converter circuit of Figure 2, they are shown on the same time axis in Figure 4D for the sake of convenience.

When the primary colour signals R', G' and B' are supplied from the external input terminal assembly 6 through the switching circuit 9 to the scan converter circuit 10, these primary colour signals R', G' and B' are processed in the manner described above for the primary colour signals R, G and B.

Although, in the above embodiment, the synchronising signal employed in the scan converter circuit 10 is the horizontal synchronising signal, the vertical synchronising signal can be similarly scan-converted. Furthermore, the speed of scan conversion is not limited to a speed which is twice the normal speed, but may be a faster speed than that.

As set forth above, in the scan converter embodying the present invention, $n$ synchronising signals are generated during a predetermined period in response to the output from the reading address counter 43 for the memory address used in scan-converting the primary colour signals, so that, contrary to the prior art, it is not necessary to superimpose the synchronising signal upon the video signal for scan conversion with the video signal. Consequently, the full dynamic range of the A/D converter 35 provided in advance of the memory 36 can be used and, therefore, the noise margin or signal-to-noise ratio can be enlarged. Further, unlike the prior art, there is no need to provide a synchronising signal separator circuit after the scan-conversion, whereby the circuit arrangement is simplified and the cost thereof is reduced.

Furthermore, since the synchronising signal is generated by reshaping and delaying the signal $2.f'_H$ from the reading address counter 43, it is possible freely to change the relative positions of the video signal and the synchronising signal, that is it is possible to change the position of the picture on the screen in the lateral direction. In addition, since a special memory is not required for the synchronising signal, the digital scan converter embodying the invention can be simplified in construction and reduced in cost.

## CLAIMS

1.      A digital scan converter for a colour video signal, the converter (10) comprising:

analog-to-digital converter means (35) for converting red, green and blue analog primary colour signals (R,G,B; R',G',B') to red, green and blue digital primary colour signals;

memory means (36) for storing the red, green and blue digital primary colour signals;

memory control means (42,43) for writing the red, green and blue digital primary colour signals in the memory means (36) at a predetermined writing speed and reading out the red, green and blue digital primary colour signals from the memory means at a reading speed which is faster than the writing speed;

digital-to-analog converter means (37) for converting the red, green and blue digital primary colour signals read out from the memory means (36) to scan-converted red, green and blue analog primary colour signals (2.R,2.G,2.B);

clock signal generating means (47,48) for supplying clock signals to the memory control means (42,43), the digital-to-analog converter means (37) and the analog-to-digital converter means (35); and

synchronising signal generator means (49) controlled by the memory control means (42,43) for producing synchronising signals $(2.f_H)$ for the scan-converted red, green and blue analog primary colour signals (2.R,2.G,2.B).

2.      A digital scan converter according to claim 1, in which the memory control means (42,43) includes writing address counter means (42) and reading address counter means (43), and the clock signal generating means (47,48) includes frequency divider means (48), the arrangement being such that the clock signals are supplied to the writing address counter means (42) and the analog-to-digital converter means (35) through the frequency divider means (48) and are supplied directly to the reading address counter means (43) and the digital-to-analog converter means (37).

3.      A digital scan converter according to claim 2, in which the reading speed is twice as fast as the writing speed and the frequency divider means (48) is operative to divide the clock signals by two.

4.    A digital scan converter according to claim 3, in which the synchronising signal generator means (49) is operative to generate synchronising signals corresponding to an address signal of the reading address counter means (43).

5.    A digital scan converter according to claim 4, in which the synchronising signal generator means (49) is operative to generate one horizontal synchronising signal during each horizontal period of the scan-converted red, green and blue analog primary colour signals (2.R,2.G,2.B).

6.    A digital scan converter according to any one of claims 1 to 5, comprising phase locked loop means (44) for the clock signal generating means (47,48).

7.    A digital scan converter according to claim 5, comprising synchronising signal separating means (7) for separating horizontal synchronising signals from the red, green and blue analog primary colour signals (R,G,B;R',G',B'), and phase locked loop means (44) for the clock signal generating means (47,48) for locking the phase of the clock signals to the horizontal synchronising signals separated from the red, green and blue analog primary colour signals.

8.    A digital scan converter according to claim 7, in which the phase locked loop means (44) includes comparator means (45) for comparing the phase of an address signal from the writing address counter means (42) and the phase of the horizontal synchronising signals separated from the red, green and blue analog primary colour signals (R,G,B;R',G',B').

9.    A digital scan converter according to claim 8, in which the memory means (36) includes a pair of one horizontal line memories (60,61) for each of the red, green and blue analog primary colour signals (R,G,B;R',G',B'), and the memory control means (42,43) causes writing in one of the pair of horizontal line memories (60,61) while reading out from the other of the pair of horizontal line memories.

10.     A digital scan converter according to claim 9, in which the memory control means (42,43) includes switch means (64,65) for switching the horizontal line memories (60,61).

# F I G. 1

F I G. 2

*F I G. 3*

*F I G. 4A*

*F I G. 4B*

*F I G. 4C*

*F I G. 4D*